(19) Europäisches Patentamt
European Patent Office
Office européen des brevets

(11) **EP 4 379 611 A1**

(12) **EUROPEAN PATENT APPLICATION**

(43) Date of publication:
**05.06.2024 Bulletin 2024/23**

(21) Application number: **23187812.5**

(22) Date of filing: **26.07.2023**

(51) International Patent Classification (IPC):
***G06N 5/01*** *(2023.01)* ***G06N 7/01*** *(2023.01)*

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022189711**

(71) Applicant: **Fujitsu Limited**
**Kawasaki-shi, Kanagawa 211-8588 (JP)**

(72) Inventors:
- **KONOSHIMA, Makiko**
  **Kawasaki-shi, Kanagawa, 211-8588 (JP)**
- **TAMURA, Hirotaka**
  **Yokohama-shi, Kanagawa, 223-0066 (JP)**
- **OHKUBO, Jun**
  **Saitama-shi, Saitama, 338-8570 (JP)**

(74) Representative: **Hoffmann Eitle**
**Patent- und Rechtsanwälte PartmbB**
**Arabellastraße 30**
**81925 München (DE)**

(54) **DATA PROCESSING DEVICE, DATA PROCESSING PROGRAM, AND DATA PROCESSING METHOD**

(57) A data processing device configured to: detect magnitude of correlate on of a continuous variable pair included in a plurality of continuous variables based on information regarding a first evaluation function that includes the plurality of continuous variables obtained by formulating a combinatorial optimization problem, allocate a larger number of common binary variables to the continuous variable pair as the correlation is larger at a time of allocating a binary variable to each of the plurality of continuous variables, generate correspondence information that indicates a correspondence relationship between each of the plurality of continuous variables and the binary variable, convert the first evaluation function into a second evaluation function that includes a plurality of binary variables, the second evaluation function being Ising-type, set coefficient information of the second evaluation function, and search for a solution to the combinatorial optimization problem using the second evaluation function and the coefficient information.

FIG. 1

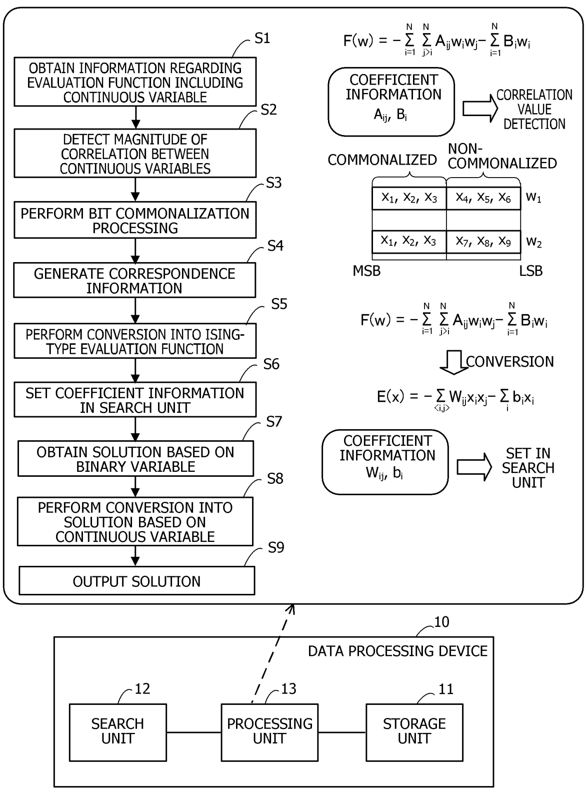


EP 4 379 611 A1

## Description

FIELD

The embodiments discussed herein are related to a data processing device, a data processing program, and a data processing method.

BACKGROUND

There is a method of converting a combinatorial optimization problem into an Ising model that represents a spin behavior of a magnetic body at a time of searching for a solution to the combinatorial optimization problem. Then, a state of the Ising model where a value of an Ising-type evaluation function (corresponding to energy of the Ising model) becomes a local minimum is searched for with the Markov chain Monte Carlo method. The evaluation function includes a plurality of state variables and a plurality of weight coefficients. In the Ising-type evaluation function, the state variable is a binary variable that takes a value of 0 or 1 (or -1 or +1). The state variable may be referred to as a bit. The state where the minimum value of local minimum values of the evaluation function is reached is to be an optimum solution. Note that a state where the value of the evaluation function becomes a local maximum may be searched for by changing a sign of the evaluation function.

Hereinafter, the Markov chain Monte Carlo method will be abbreviated as an MCMC method. Furthermore, processing based on the MCMC method may be referred to as MCMC processing. In the MCMC processing, for example, a state transition is accepted at an acceptance probability of the state transition defined by the Metropolis method or the Gibbs method. Examples of the MCMC method include simulated annealing and a replica exchange method.

Meanwhile, some combinatorial optimization problems are formulated using an evaluation function including a continuous variable. There has been a method of converting a continuous variable into a binary variable using binary expansion or the like so that such a combinatorial optimization problem may be converted into an Ising model for calculation.

Japanese Laid-open Patent Publication No. 2020-67811 is disclosed as related art.

SUMMARY

[TECHNICAL PROBLEM]

In a case of simply discretizing a continuous variable to convert it into a binary variable based on the binary expansion or the like, the number of binary variables (number of bits) significantly increases depending on the number of continuous variables, obtaining accuracy, or the like, which may increase the scale of the problem. Note that, in a case where the number of bits to be allocated to each continuous variable is simply reduced, accuracy of an obtained solution is lowered at a time of converting values of a plurality of binary variables obtained after the solution search using the Ising model into continuous variables again.

In one aspect, an object of the embodiments is to provide a data processing device, a program, and a data processing method capable of reducing the number of bits at a time of converting an evaluation function including a plurality of continuous variables into an Ising-type evaluation function.

[SOLUTION TO PROBLEM]

According to an aspect of the embodiments, a data processing device includes a storage unit that stores information regarding a first evaluation function that includes a plurality of continuous variables obtained by formulating a combinatorial optimization problem; a search unit that searches for a solution to the combinatorial optimization problem using an Ising-type second evaluation function that includes a plurality of binary variables; and a processing unit that: obtains the information from the storage unit, detects magnitude of correlation of a continuous variable pair included in the plurality of continuous variables based on the information, allocates a larger number of common binary variables to the continuous variable pair as the correlation is larger at a time of allocating a binary variable to each of the plurality of continuous variables, generates correspondence information that indicates a correspondence relationship between each of the plurality of continuous variables and the allocated binary variable, converts the first evaluation function into the second evaluation function, and sets coefficient information of the second evaluation function in the search unit.

[ADVANTAGEOUS EFFECTS OF INVENTION]

In one aspect, the embodiments may reduce the number of bits at a time of converting an evaluation function including a plurality of continuous variables into an Ising-type evaluation function.

BRIEF DESCRIPTION OF DRAWINGS

FIG. 1 is a diagram illustrating an exemplary data processing device according to a first embodiment;
FIG. 2 is a diagram illustrating exemplary hardware of a data processing device according to a second embodiment;
FIG. 3 is a block diagram illustrating exemplary functions of the data processing device according to the second embodiment;
FIG. 4 is a flowchart illustrating an exemplary flow of a process of detecting magnitude of correlation performed by a correlation detection unit;
FIG. 5 is a diagram illustrating an example of a list L(c);
FIG. 6 is a diagram illustrating an example of correlation information Y;
FIG. 7 is a flowchart illustrating an exemplary flow of a bit allocation process performed by a bit allocation unit;
FIG. 8 is a diagram illustrating an exemplary relationship between magnitude of correlation of a continuous variable pair and the number of allocated bits;
FIG. 9 is a diagram illustrating exemplary bit commonalization;
FIG. 10 is a diagram illustrating an example of commonality information Z;
FIG. 11 is a flowchart illustrating an exemplary flow of an evaluation function conversion process performed by an evaluation function conversion unit;
FIG. 12 is a diagram illustrating an example of correspondence information U;
FIG. 13 is a block diagram illustrating exemplary functions of a data processing device according to a third embodiment;
FIG. 14 is a diagram illustrating an example of time-series information D; and
FIG. 15 is a flowchart illustrating an exemplary flow of a correlation detection process based on the time-series information D.

DESCRIPTION OF EMBODIMENTS

Hereinafter, modes for carrying out embodiments will be described with reference to the drawings.

(First Embodiment)

FIG. 1 is a diagram illustrating an exemplary data processing device according to a first embodiment.
A data processing device 10 includes a storage unit 11, a search unit 12, and a processing unit 13.
The storage unit 11 stores information regarding an evaluation function obtained by formulating a combinatorial optimization problem. The evaluation function includes a plurality of continuous variables (which may also be referred to as real variables).
An evaluation function F(w) including the plurality of continuous variables may be expressed by, for example, the following equation (1).
[Equation 1]

$$F(w) = -\sum_{i=1}^{N}\sum_{j>i}^{N} A_{ij} w_i w_j - \sum_{i=1}^{N} B_i w_i \qquad (1)$$

The first term on the right side indicates a value obtained by, for all combinations of N continuous variables, summing up products of values of two continuous variables and a weight coefficient (indicating strength of correlation between the two continuous variables) with neither an omission nor an overlap. A continuous variable with an identification number i is represented by $w_i$, a continuous variable with an identification number j is represented by $w_j$, and a weight coefficient indicating magnitude of correlation between the continuous variables with the identification numbers i and j is represented by $A_{ij}$. The second term on the right side indicates a value obtained by summing up products of a bias coefficient and a continuous variable for each identification number. A bias coefficient for the identification number = i is represented by $B_i$.
A solution to the combinatorial optimization problem is represented by values of the N continuous variables. A solution that minimizes the value of the evaluation function corresponds to the optimum solution to the combinatorial optimization problem. Hereinafter, the value of the evaluation function will be referred to as energy. Note that, in a case of a problem that maximizes the energy, it is sufficient if the sign of the evaluation function is reversed.

The information regarding the evaluation function stored in the storage unit 11 includes the weight coefficient and the bias coefficient as described above. Moreover, the storage unit 11 may store a range (lower limit value and upper limit value) of each continuous variable and a target number of bits at a time of converting the evaluation function using the continuous variables into an Ising-type evaluation function.

Note that coefficient information of the evaluation function, the range of each continuous variable, and the target number of bits may be input by a user operating an input device (not illustrated), and may be stored in the storage unit 11, for example.

The storage unit 11 is, for example, a volatile storage device that is an electronic circuit such as a dynamic random access memory (DRAM), or a non-volatile storage device that is an electronic circuit such as a hard disk drive (HDD) or a flash memory. The storage unit 11 may include an electronic circuit such as a register.

The search unit 12 searches for a solution to the combinatorial optimization problem by the MCMC method using the Ising-type evaluation function. The Ising-type evaluation function includes a plurality of binary variables that takes a value of 0 or 1. The binary variable may be referred to as a bit. The solution to the combinatorial optimization problem output by the search unit 12 is expressed by values of the plurality of binary variables. A solution that minimizes the value of the evaluation function corresponds to the optimum solution to the combinatorial optimization problem.

The Ising-type evaluation function may be expressed by, for example, the following equation (2).

[Equation 2]

$$H(x) = -\sum_{<i,j>} W_{ij} x_i x_j - \sum_i b_i x_i \qquad (2)$$

A state vector x has a plurality of binary variables as elements, and represents a state of an Ising model. The equation (1) is an evaluation function formulated in a quadratic unconstrained binary optimization (QUBO) format. Note that, in a case of a problem that maximizes the energy, it is sufficient if the sign of the evaluation function is reversed.

The first term on the right side of the equation (2) indicates a value obtained by, for all combinations of two binary variables selectable from among all binary variables, summing up products of values of two binary variables and a weight coefficient with neither an omission nor an overlap. Subscripts i and j are indices of the binary variables. An i-th binary variable is represented by $x_i$. A j-th binary variable is represented by $x_j$. Hereinafter, it is assumed that the number of binary variables is the target number of bits = T. A weight coefficient indicating magnitude of correlation between the i-th and j-th binary variables is represented by $W_{ij}$. $W_{ij} = W_{ji}$ and $W_{ii} = 0$ are satisfied. When the number of binary variables (number of bits) is T, the number of $W_{ij}$ is $T \times T$.

The second term on the right side of the equation (2) indicates a value obtained by summing up products of each bias coefficient of all the binary variables and a binary variable value. A bias coefficient for the i-th binary variable is represented by $b_i$.

When a value of the binary variable $x_i$ changes to $1 - x_i$, a change amount of the binary variable $x_i$ may be expressed as $\Delta x_i = (1 - x_i) - x_i = 1 - 2x_i$. Therefore, with respect to the evaluation function H(x), an energy change amount ($\Delta H_i$) accompanying the change in the binary variable $x_i$ may be expressed by the following equation (3).

[Equation 3]

$$\Delta H_i = -\Delta x_i \left( \sum_j W_{ij} x_j + b_i \right) = -\Delta x_i h_i \qquad (3)$$

Here, $h_i$ is called a local field (LF). A change amount in $h_i$ when a value of $x_j$ changes is expressed as $\Delta h_i^{(j)} = W_{ij} \Delta x_j$.

In a search for a solution, the Metropolis method or the Gibbs method is used to determine whether or not to accept a state transition in which the energy change amount becomes $\Delta H_i$, which is, a change in the value of the binary variable $x_i$. Specifically, in a neighbor search for searching for a transition from a certain state to another state where energy is lower than that in the certain state, a transition to not only a state where the energy decreases but also a state where the energy increases is probabilistically accepted. For example, an acceptance probability $A_i$ for accepting a change in the binary variable value that causes $\Delta H_i$ may be expressed by the equation (4).

[Equation 4]

$$A_i = \begin{cases} \min[1, \exp(-\beta \Delta H_i] & \text{Metropolis method} \\ 1/[1+\exp(\beta \Delta H_i)] & \text{Gibbs method} \end{cases} \qquad (4)$$

The reference β represents a reciprocal (β = 1/t) of a parameter t (t > 0) indicating a temperature, and is called an inverse temperature. Hereinafter, β and t may be referred to as temperature values. A min operator indicates that a minimum value of arguments is taken. The upper right side of the equation (4) corresponds to the Metropolis method. The lower right side of the equation (4) corresponds to the Gibbs method.

In a case of performing the simulated annealing, for example, a value of t decreases according to a predetermined temperature parameter change schedule each time the determination as to whether or not to accept a change in the binary variable value is repeated a predetermined number of times. Then, the search unit 12 outputs, as a search result, a state obtained when the determination processing described above is repeated the predetermined number of times. Note that the search unit 12 may hold the state when the previous minimum energy has been reached. In that case, the search unit 12 may output, as a search result, a state corresponding to the minimum energy stored after the determination processing described above is repeated the predetermined number of times.

In a case of performing the replica exchange method, the search unit 12 repeats the determination processing described above for each of a plurality of replicas for which individual different values of t are set. Then, the search unit 12 carries out a replica exchange each time the determination processing described above is repeated a predetermined number of times. For example, the search unit 12 selects two replicas having adjacent t values, and exchanges values of respective binary variables between the selected two replicas at a predetermined exchange probability based on a difference in energy or in t values between the replicas. Note that the t values may be exchanged between the two replicas instead of the values of the respective binary variables. Alternatively, the search unit 12 holds the state when the previous minimum energy has been reached. Then, the search unit 12 outputs, as a search result, a state corresponding to the minimum energy in all the replicas among the minimum energies stored after the determination processing described above is repeated the predetermined number of times in the individual replicas.

The search unit 12 as described above may be implemented using, for example, an electronic circuit such as an application specific integrated circuit (ASIC) or a field programmable gate array (FPGA). Furthermore, the search unit 12 may be implemented by software processing obtained by a processor that is hardware such as a central processing unit (CPU), a graphics processing unit (GPU) or a digital signal processor (DSP) executing a program.

The processing unit 13 performs the following process to convert an evaluation function including a continuous variable into an Ising-type evaluation function. In FIG. 1, a flow of the process performed by the processing unit 13 is illustrated.

Step S1: The processing unit 13 obtains (reads) information regarding the evaluation function including the continuous variable from the storage unit 11. For example, the processing unit 13 obtains coefficient information ($A_{ij}$, $B_i$) as information regarding the evaluation function expressed by the equation (1).

Step S2: The processing unit 13 detects magnitude of correlation of a continuous variable pair included in a plurality of continuous variables based on the obtained information. For example, the processing unit 13 detects $A_{ij}$ as magnitude of correlation between a pair of continuous variables $w_i$ and $w_j$. Note that, influence of a change in values of $w_i$ and $w_j$ on F(w) is larger as $B_i$ and $B_j$, which are bias coefficients, are larger. In consideration of such influence, the processing unit 13 may detect $A_{ij} + B_i + B_j$ as magnitude of correlation. Moreover, the processing unit 13 may carry out a search for F(w) using the MCMC method in a relatively short time, and may detect the magnitude of correlation between the plurality of continuous variables based on time-series information indicating a temporal change of the value of each continuous variable obtained as a result of the search (see FIGs. 13 to 15 to be described later).

Step S3: The processing unit 13 performs bit commonalization processing at a time of allocating one or a plurality of binary variables to each of the plurality of continuous variables. In the bit commonalization processing, the processing unit 13 determines a binary variable to be allocated to the continuous variable pair in common based on the magnitude of correlation. A continuous variable pair having a larger correlation is more likely to have a similar value. Thus, the processing unit 13 increases the number of binary variables to be allocated in common as the continuous variable pair has a larger correlation.

FIG. 1 illustrates an example in which the bit commonalization is performed on the pair of continuous variables $w_1$ and $w_2$ in the case of performing binary expansion on the continuous variables. Each of $w_1$ and $w_2$ is represented by six binary variables. Three binary variables of $x_1$, which is the most significant bit (MSB), $x_2$, and $x_3$ in that order are shared between $w_1$ and $w_2$. The three binary variables on the side of the least significant bit (LSB) are not commonalized.

Note that a more specific example of the bit commonalization processing will be described later.

Step S4: The processing unit 13 generates correspondence information indicating a correspondence relationship between each of the plurality of continuous variables and the allocated binary variables. The correspondence information may be expressed by, for example, a matrix formula to be described later (see FIG. 12). In generating the correspondence information, for example, a range of each continuous variable stored in the storage unit 11 or the like is used.

Step S5: The processing unit 13 converts, for example, the evaluation function including the plurality of continuous variables as expressed by the equation (1) into the Ising-type evaluation function as expressed by the equation (2) based on the generated correspondence information.

Step S6: The processing unit 13 sets coefficient information of the Ising-type evaluation function in the search unit 12. For example, the processing unit 13 sets $W_{ij}$ and $b_i$ in the search unit 12 as the coefficient information of the Ising-type evaluation function expressed by the equation (2).

Step S7: The processing unit 13 obtains a solution based on binary variables, which is a result of the search by the search unit 12.

Step S8: The processing unit 13 convers the solution based on binary variables into a solution based on continuous variables based on the correspondence information.

Step S9: The processing unit 13 outputs the solution based on continuous variables. For example, the processing unit 13 may cause the solution to be displayed on a display device (not illustrated), or may transmit it to an external device of the data processing device 10.

The processing unit 13 that performs such a process may be implemented by, for example, software processing obtained by a processor that is hardware such as a CPU, a GPU, or a DSP executing a program. Note that the processing unit 13 may also be implemented using an electronic circuit such as an ASIC or an FPGA.

As described above, at a time of converting an evaluation function based on continuous variables into an evaluation function based on binary variables, the data processing device 10 according to the first embodiment commonalizes a part of the binary variables between the continuous variables based on the magnitude of correlation between the continuous variables. As a result, it becomes possible to reduce the number of bits after the conversion as compared with the case of simply discretizing the continuous variables to convert them into the binary variables by the binary expansion or the like. For example, in the case of binarizing $w_1$ and $w_2$ each represented by 6-bit precision in the example illustrated in FIG. 1, six binary variables for each of them, which are 12 binary variables in total, may not be used. It is sufficient if nine binary variables in total are used. As a result, it becomes possible to suppress the problem scale calculated by the search unit 12.

(Second Embodiment)

FIG. 2 is a diagram illustrating exemplary hardware of a data processing device according to a second embodiment.

A data processing device 20 is, for example, a computer, and includes a processor 21, a RAM 22, an HDD 23, a GPU 24, an input interface 25, a medium reader 26, a communication interface 27, and an accelerator card 28. The units described above are coupled to a bus.

The processor 21 is a processor such as a GPU or a CPU including an arithmetic circuit that executes a program command and a storage circuit such as a cache memory. The processor 21 loads at least a part of a program and data stored in the HDD 23 into the RAM 22, and executes the program. Note that the processor 21 may include a plurality of processor cores. Furthermore, the data processing device 20 may include a plurality of processors. Note that a set of the plurality of processors (multiprocessor) may be called a "processor".

The RAM 22 is a volatile semiconductor memory that temporarily stores the program to be executed by the processor 21 and data to be used by the processor 21 for arithmetic operations. Note that the data processing device 20 may include a memory of a type different from the RAM 22, or may include a plurality of memories.

The HDD 23 is a non-volatile storage device that stores programs of software such as an operating system (OS), middleware, application software, and the like, and data. The programs include, for example, a program for causing the data processing device 20 to perform a process of searching for a solution to a combinatorial optimization problem. Note that the data processing device 20 may include another type of the storage device such as a flash memory or a solid state drive (SSD), or may include a plurality of non-volatile storage devices.

The GPU 24 outputs an image (e.g., image related to a calculation result of the combinatorial optimization problem) to a display 24a coupled to the data processing device 20 in accordance with an instruction from the processor 21. As the display 24a, a cathode ray tube (CRT) display, a liquid crystal display (LCD), a plasma display panel (PDP), an organic electroluminescence (OEL) display, or the like may be used.

The input interface 25 obtains input signals from an input device 25a coupled to the data processing device 20, and outputs them to the processor 21. As the input device 25a, a pointing device such as a mouse, a touch panel, a touch pad, or a trackball, a keyboard, a remote controller, a button switch, or the like may be used. Furthermore, a plurality of types of input devices may be coupled to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. Examples of the magnetic disk include a flexible disk (FD) and an HDD. Examples of the optical disk include a compact disc (CD) and a digital versatile disc (DVD).

The medium reader 26 copies, for example, a program or data read from the recording medium 26a to another recording medium such as the RAM 22 or the HDD 23. The read program is executed by, for example, the processor 21. Note that the recording medium 26a may be a portable recording medium, and may be used for distribution of a program or data. Furthermore, the recording medium 26a and the HDD 23 may be referred to as computer-readable recording media.

The communication interface 27 is an interface that is coupled to a network 27a and communicates with another information processing device via the network 27a. The communication interface 27 may be a wired communication interface coupled to a communication device such as a switch by a cable, or may be a wireless communication interface coupled to a base station by a wireless link.

The accelerator card 28 is a hardware accelerator that searches for a solution to a combinatorial optimization problem. The accelerator card 28 includes an FPGA 28a and a DRAM 28b.

FIG. 3 is a block diagram illustrating exemplary functions of the data processing device according to the second embodiment.

The data processing device 20 includes an input unit 30, a storage unit 31, a correlation detection unit 32, a bit allocation unit 33, an evaluation function conversion unit 34, a coefficient information setting unit 35, a search unit 36, a solution conversion unit 37, and an output unit 38. The storage unit 31 may be implemented using, for example, a storage area secured in the RAM 22 or the HDD 23. The input unit 30, the correlation detection unit 32, the bit allocation unit 33, the evaluation function conversion unit 34, the coefficient information setting unit 35, the solution conversion unit 37, and the output unit 38 may be implemented using, for example, a program module executed by the processor 21. The search unit 36 may be implemented using, for example, the accelerator card 28. Note that the search unit 36 may also be implemented using a program module executed by the processor 21.

The input unit 30 receives inputs of information regarding an evaluation function F(w) as expressed by the equation (1), the number of continuous variables (N), the target number of bits (T), and an upper limit value ($\alpha_i$) and a lower limit value ($\beta_i$) of each continuous variable. For example, various types of information described above are input by a user operating the input device 25a.

Note that a continuous variable $w_i$ may be expressed by the following equation (5) using $\alpha_i$ and $\beta_i$.

[Equation 5]

$$w_i \approx (\alpha_i - \beta_i) \sum_{k=1}^{d_i} x_{i,k} \delta_w(k) + \beta_i \qquad (5)$$

The number of binary variables (number of bits) indicating the continuous variable $w_i$ is represented by $d_i$. It may also be said that $d_i$ represents accuracy indicating the continuous variable $w_i$. An identification number of the binary variable indicating the continuous variable $w_i$ is represented by k, and k = 1 to $d_i$. The binary variable of the identification number = k indicating the continuous variable $w_i$ is represented by $x_{i,k}$. A weight coefficient for the binary variable of the identification number = k is represented by $\delta_w(k)$, which is expressed by the following equation (6) in a case of performing binary expansion.

[Equation 6]

$$\delta_w(k) = 2^{k-1} / (2^{d_i} - 1) \qquad (6)$$

In a case where the continuous variable is expressed by a plurality of binary variables with redundancy instead of the binary expansion, $\delta_w(k)$ may be simply set as $\delta_w(k) = 1/d_i$.

The storage unit 31 stores the input various types of information.

The correlation detection unit 32 obtains coefficient information of F(w) from the storage unit 31, and detects magnitude of correlation between the continuous variables based on the coefficient information. The correlation detection unit 32 outputs the detected magnitude of correlation as correlation information Y to be described later.

The bit allocation unit 33 allocates a binary variable to each continuous variable based on the correlation information Y and N and T read from the storage unit 31. The bit allocation unit 33 outputs, as an allocation result, commonality information Z to be described later and the number of bits ($d_i$) of each continuous variable.

The evaluation function conversion unit 34 generates correspondence information U indicating a correspondence relationship between each of a plurality of continuous variables and the allocated binary variable based on the information regarding F(w) read from the storage unit 31, $\alpha_i$ and $\beta_i$, the commonality information Z, and $d_i$. Then, the evaluation function conversion unit 34 converts F(w) into H(x) based on the correspondence information U.

The coefficient information setting unit 35 sets coefficient information ($W_{ij}$ and $b_i$) of H(x) in the search unit 36.

The search unit 36 performs processing similar to that of the search unit 12 illustrated in FIG. 1. In other words, the search unit 36 searches for, for example, a state where the value of the evaluation function including T binary variables is minimized (combination of T binary variable values) by the MCMC method based on the set coefficient information.

The solution conversion unit 37 converts a solution based on binary variables into a solution based on continuous variables based on the correspondence information U generated by the evaluation function conversion unit 34.

The output unit 38 outputs the solution based on continuous variables. For example, the output unit 38 may cause the solution to be displayed on a display device (not illustrated), or may transmit it to an external device of the data processing device 20.

(Exemplary Correlation Detection Process)

FIG. 4 is a flowchart illustrating an exemplary flow of a process of detecting magnitude of correlation performed by the correlation detection unit.

Step S10: The correlation detection unit 32 obtains the coefficient information of F(w) from the storage unit 31. The coefficient information of F(w) includes a weight coefficient ($A_{ij}$) and bias coefficients ($B_i$, $B_j$).

Step S11: The correlation detection unit 32 calculates $M_{ij}$ indicating the magnitude of correlation for each of continuous variable pairs selectable from the N continuous variables using the equation of $M_{ij} = A_{ij} + B_i + B_j$.

Step S12: The correlation detection unit 32 creates a list L(c) = (i, j, $M_{ij}$) based on a calculation result of $M_{ij}$. The initial value of c is 1, and c is counted up each time data of (i, j, $M_{ij}$) is recorded in the list L(c). In a case where a plurality of continuous variables $W_j$ has correlation with the same continuous variable $w_i$, for example, the correlation detection unit 32 records (i, j, $M_{ij}$) with the largest $M_{ij}$ in the list L(c). Note that, in the case where the plurality of continuous variables $w_j$ has correlation with the same continuous variable $w_i$, the correlation detection unit 32 may record a plurality of (i, j, $M_{ij}$) in descending order of $M_{ij}$ in the list L(c), for example.

Step S13: The correlation detection unit 32 outputs the correlation information Y obtained by sorting the list L(c) in descending order of $M_{ij}$, and terminates the process of detecting the magnitude of correlation.

FIG. 5 is a diagram illustrating an example of the list L(c).

In the list L(c), (i, j, $M_{ij}$) is recorded. For example, the magnitude of correlation between $w_7$ and $w_9$, which is $M_{7,9}$ = 10, is recorded in the first row, and the magnitude of correlation between $w_8$ and $w_{19}$, which is $M_{8,19}$ = 733, is recorded in the second row. In the last row, the magnitude of correlation between $w_{16}$ and $w_{24}$, which is $M_{16,24}$ = 200, is recorded. The created list L(c) may be stored in the storage unit 31.

FIG. 6 is a diagram illustrating an example of the correlation information Y.

FIG. 6 illustrates an example of the correlation information Y obtained by sorting the list L(c) illustrated in FIG. 5 when the magnitude of correlation in the second row is the largest, the magnitude of correlation in the last row is the second largest, and the magnitude of correlation in the first row is the smallest.

(Exemplary Bit Allocation Process)

FIG. 7 is a flowchart illustrating an exemplary flow of a bit allocation process performed by the bit allocation unit.

Step S20: The bit allocation unit 33 obtains the correlation information Y output from the correlation detection unit 32, and N (number of all continuous variables) and T (target number of bits) stored in the storage unit 31.

Step S21: The bit allocation unit 33 determines a relationship between the magnitude of correlation of the continuous variable pair and the number of allocated bits based on N.

FIG. 8 is a diagram illustrating an exemplary relationship between the magnitude of correlation of the continuous variable pair and the number of allocated bits. In FIG. 8, the horizontal axis represents the descending order of correlation (1 to N/2), and the vertical axis represents the number of allocated bits.

A reference number of bits allocated to one continuous variable is represented by d, which is determined as, for example, T/N or the like. For example, the bit allocation unit 33 determines an allocation relationship in which d/2 bits are allocated to the continuous variable pair with the maximum correlation and 2d bits are allocated to the continuous variable pair with the minimum correlation. For example, the number of bits is allocated to the continuous variable pairs with the correlation between the minimum and the maximum according to a straight line 40 of y = ax + b when the vertical axis is y and the horizontal axis is x. A gradient a is 3d/(N - 2) and an intercept b is (N - 8)/(2N - 4). Note that the number of bits may be allocated to the continuous variable pairs with the correlation between the minimum and the maximum according to, for example, an exponential curve 41, a logarithmic curve 42, or the like.

Step S22: The bit allocation unit 33 determines, based on the correlation information Y, the number of allocated bits gwm for the continuous variable pair according to the relationship between the magnitude of correlation and the number of allocated bits determined as in FIG. 8 in the order of magnitude of correlation. Moreover, when the sum of gwm calculated in each of N/2 continuous variable pairs is K, the bit allocation unit 33 adjusts each gwm to gwm $\times$ T/K such that K becomes the target number of bits (T).

Step S23: The bit allocation unit 33 performs bit commonalization on each continuous variable pair according to the magnitude of correlation. In the case of performing the binary expansion on the continuous variable, a bit position to be commonalized is on the MSB side as illustrated in FIG. 1. In the case of expressing the continuous variable with the plurality of binary variables with redundancy as described above, the bit position to be commonalized is not limited to the MSB side.

For example, the bit allocation unit 33 sets the number of bits not to be commonalized to at least a half of gwm. Then, when the order of the magnitude of correlation illustrated in FIG. 8 is k, the bit allocation unit 33 increases the number of bits not to be commonalized according to an expression of gwm $\times$ (1 + 0.1k)/2 as k increases.

FIG. 9 is a diagram illustrating exemplary bit commonalization.

FIG. 9 illustrates an example of the bit commonalization with respect to the continuous variable pair of $w_8$ and $w_{19}$. The 2gw1 bits on the MSB side are commonalized, and the gw1 bits on the LSB side are non-commonalized. Thus, gwm = 2gw1 + 2gw1 = 4gw1, and the number of bits not to be commonalized in the continuous variable pair = 2gw1 is 1/2 of gwm.

Step S24: The bit allocation unit 33 generates the commonality information Z based on a result of the bit commonalization.

FIG. 10 is a diagram illustrating an example of the commonality information Z.

In FIG. 10, the number of bits to be mutually commonalized = 2gw1 and the number of bits to be non-commonalized = gw1 are recorded among the bits allocated to each of $w_8$ and $w_{19}$ illustrated in FIG. 9. Although illustration is omitted, for other continuous variable pairs as well, the number of bits to be mutually commonalized and the number of bits to be non-commonalized are recorded based on gwm and the magnitude of correlation.

Step S25: The bit allocation unit 33 outputs the commonality information Z and the number of bits ($d_i$) for each $w_i$, and terminates the bit allocation process. The sum of the number of bits to be commonalized and the number of bits to be non-commonalized is represented by $d_i$, and in the example of the commonality information Z illustrated in FIG. 9, $d_i$ of $w_8$ and $w_{19}$ is 2gw1 + gw1 = 3gw1.

(Exemplary Evaluation Function Conversion Process)

FIG. 11 is a flowchart illustrating an exemplary flow of an evaluation function conversion process performed by the evaluation function conversion unit.

Step S30: The evaluation function conversion unit 34 obtains the commonality information Z and $d_i$ output from the bit allocation unit 33, and the information regarding F(w), $\alpha_i$, and $\beta_i$ stored in the storage unit 31.

Step S31: The evaluation function conversion unit 34 generates the correspondence information U between the continuous variable and the binary variable based on the obtained various types of information.

FIG. 12 is a diagram illustrating an example of the correspondence information U.

The correspondence information U may be expressed by a matrix formula as illustrated in FIG. 12. The same binary variable is allocated for the number of bits to be commonalized in the continuous variable pair based on the commonality information Z. In the example of FIG. 12, the number of bits to be commonalized in the continuous variable pair of $w_1$ and $w_2$ is 3 bits, and the number of bits to be non-commonalized is also 3 bits. Thus, $x_1$, $x_2$, and $x_3$, which are binary variables, are allocated to each of $w_1$ and $w_2$ in common. Moreover, $x_4$, $x_5$, and $x_6$ are allocated to $w_1$, and $x_7$, $x_8$, and $x_9$ are allocated to $w_2$ based on the number of bits ($d_i$) for each $w_i$ output from the bit allocation unit 33.

The correspondence between the continuous variable and the binary variable is expressed using a weight coefficient. For example, $w_1 = x_1\delta_{1,1} + x_2\delta_{1,2} + x_3\delta_{1,3} + x_4\delta_{1,4} + x_5\delta_{1,5} + x_6\delta_{1,6}$ holds with respect to $w_1$. Further, $w_2 = x_1\delta_{1,1} + x_2b_{1,2} + x_3\delta_{1,3} + x_7\delta_{1,4} + x_8\delta_{1,5} + x_9\delta_{1,6}$ holds with respect to $w_2$.

Here, $\delta_{1,1}$ to $\delta_{1,6}$ are weight coefficients, which may be calculated based on the value of $\delta_w(k)$ when $d_i$ = 6 and k = 1 to 6 in the equation (6), $\alpha_i$, and $\beta_i$.

Step S32: The evaluation function conversion unit 34 converts F(w) into H(x) based on the correspondence information U, and terminates the evaluation function conversion process. The evaluation function conversion unit 34 may convert F(w) into, for example, H(x) as expressed by the equation (2) by substituting the product sum of the binary variable and the weight coefficient as described above represented in the correspondence information U into each continuous variable of F(w).

(Subsequent Process)

The coefficient information setting unit 35 sets the coefficient information ($W_{ij}$ and $b_i$) of H(x) in the search unit 36, and the search unit 36 searches for a state where the value of H(x) is minimized by the MCMC method. The solution conversion unit 37 converts a solution based on binary variables into a solution based on continuous variables based on the correspondence information U generated by the evaluation function conversion unit 34. For example, the solution conversion unit 37 substitutes the value of the solution obtained by the search unit 36 into each binary variable of the correspondence information U expressed by the matrix formula as illustrated in FIG. 12, and calculates a value of each continuous variable. The output unit 38 outputs the solution based on continuous variables.

According to the data processing device 20 according to the second embodiment as described above, it becomes possible to detect magnitude of correlation between continuous variables using the coefficient information of F(w). Additionally, since a continuous variable pair having a larger correlation is more likely to have a similar value, the number of binary variables (number of bits) to be commonalized may be increased. By commonalizing bits as described above, it becomes possible to reduce the target number of bits (T), and to reduce the number of bits after the conversion into H(x) as compared with the case of simply discretizing the continuous variables to convert them into the binary variables by the binary expansion or the like.

(Third Embodiment)

FIG. 13 is a block diagram illustrating exemplary functions of a data processing device according to a third embodiment. In FIG. 13, elements same as the elements illustrated in FIG. 3 are denoted by the same reference signs.

A data processing device 50 according to the third embodiment includes an MCMC processing unit 51.

The MCMC processing unit 51 obtains information regarding F(w) from a storage unit 31, and carries out a search by the MCMC method for a predetermined period of time based on the information regarding F(w). Since the search performed by the MCMC processing unit 51 does not search for an optimum solution, it may need a shorter time than a search performed by a search unit 36. Furthermore, the MCMC processing in which a value of a temperature parameter is changed as in the simulated annealing may be performed, or the MCMC processing may be performed in a state where the value of the temperature parameter is fixed.

The MCMC processing unit 51 outputs time-series information D indicating a temporal change of a value of each continuous variable obtained by the search for the predetermined period of time.

A correlation detection unit 52 detects magnitude of correlation of a continuous variable pair from the temporal change of the value of each continuous variable based on the time-series information D, and generates and outputs correlation information Y.

The MCMC processing unit 51 and the correlation detection unit 52 may be implemented using, for example, a program module executed by a processor 21.

FIG. 14 is a diagram illustrating an example of the time-series information D.

In FIG. 14, a time is expressed by a Monte Carlo step (MCS) of the MCMC processing. Each continuous variable changes as the MCS progresses.

FIG. 15 is a flowchart illustrating an exemplary flow of a correlation detection process based on the time-series information D.

Step S40: The correlation detection unit 52 obtains the time-series information D from the MCMC processing unit 51.

Step S41: The correlation detection unit 52 regards a value of each continuous variable arranged in the time series direction (row direction in FIG. 14) as a vector, and normalizes it within a range of $\pm 1$. Then, the correlation detection unit 52 calculates a square error between vectors for each continuous variable pair selectable from N continuous variables. A value obtained by adding a negative sign to the square error is $M_{ij}$ indicating the magnitude of correlation. Note that the correlation detection unit 52 may set cosine similarity between vectors as $M_{ij}$.

Step S42: The correlation detection unit 52 creates a list L(c) = (i, j, $M_{ij}$) based on a calculation result of $M_{ij}$. The initial value of c is 1, and c is counted up each time data of (i, j, $M_{ij}$) is recorded in the list L(c). In a case where a plurality of continuous variables $w_j$ has correlation with the same continuous variable $w_i$, for example, the correlation detection unit 52 records (i, j, $M_{ij}$) with the largest $M_{ij}$ in the list L(c). Note that, in the case where the plurality of continuous variables $w_j$ has correlation with the same continuous variable $w_i$, the correlation detection unit 52 may record a plurality of (i, j, $M_{ij}$) in descending order of $M_{ij}$ in the list L(c), for example.

Step S43: The correlation detection unit 52 outputs the correlation information Y obtained by sorting the list L(c) in descending order of $M_{ij}$, and terminates the process of detecting the magnitude of correlation.

Subsequent processing is similar to that of the data processing device 20 according to the second embodiment.

Such a data processing device 50 according to the third embodiment detects the magnitude of correlation of the continuous variable pair based on the result of actually performing the MCMC processing, whereby the magnitude of correlation may be detected more appropriately.

Meanwhile, the processing contents performed by the data processing devices 10, 20, and 50 according to the respective embodiments described above may also be implemented by software by causing the data processing devices 10, 20, and 50 to execute a program.

The program may be recorded in a computer-readable recording medium. As the recording medium, for example, a magnetic disk, an optical disk, a magneto-optical disk, a semiconductor memory, or the like may be used. Examples of the magnetic disk include a flexible disk (FD) and an HDD. Examples of the optical disk include a compact disc (CD), a CD-recordable (R)/rewritable (RW), a digital versatile disc (DVD), and a DVD-R/RW. The program may be recorded in a portable recording medium and distributed. In that case, the program may be copied from the portable recording medium to another recording medium to be executed.

While one aspect of the data processing device, the program, and the data processing method according to the present disclosure has been described based on the embodiments, this is merely an example, and is not limited to the description above.

## Claims

**1.** A data processing device comprising:

a storage unit that stores information regarding a first evaluation function that includes a plurality of continuous variables obtained by formulating a combinatorial optimization problem;
a search unit that searches for a solution to the combinatorial optimization problem using an Ising-type second evaluation function that includes a plurality of binary variables; and
a processing unit that:

obtains the information from the storage unit,
detects magnitude of correlation of a continuous variable pair included in the plurality of continuous variables based on the information,
allocates a larger number of common binary variables to the continuous variable pair as the correlation is larger at a time of allocating a binary variable to each of the plurality of continuous variables,
generates correspondence information that indicates a correspondence relationship between each of the plurality of continuous variables and the allocated binary variable,
converts the first evaluation function into the second evaluation function, and
sets coefficient information of the second evaluation function in the search unit.

**2.** The data processing device according to claim 1, wherein

the information includes a weight coefficient between a first continuous variable and a second continuous variable among the plurality of continuous variables, and
the processing unit detects the weight coefficient as the magnitude of the correlation of the continuous variable pair that includes the first continuous variable and the second continuous variable.

**3.** The data processing device according to claim 1, wherein

the information includes a weight coefficient between a first continuous variable and a second continuous variable among the plurality of continuous variables, a first bias coefficient for the first continuous variable, and a second bias coefficient for the second continuous variable, and
the processing unit detects a sum of the weight coefficient, the first bias coefficient, and the second bias coefficient as the magnitude of the correlation of the continuous variable pair that includes the first continuous variable and the second continuous variable.

**4.** The data processing device according to claim 1, wherein
the processing unit detects the magnitude of the correlation based on time-series information that indicates a temporal change of a value of the plurality of continuous variables obtained by a search that uses a Markov chain Monte Carlo method for a predetermined period, the search being performed based on the information.

**5.** The data processing device according to claim 1, wherein
the processing unit obtains a first solution represented by a value of the plurality of binary variables output from the search unit, and converts the first solution into a second solution represented by a value of the plurality of continuous variables based on the correspondence information.

**6.** A data processing program that causes at least one computer to execute a process, the process comprising:

detecting magnitude of correlate on of a continuous variable pair included in a plurality of continuous variables based on information regarding a first evaluation function that includes the plurality of continuous variables obtained by formulating a combinatorial optimization problem;
allocating a larger number of common binary variables to the continuous variable pair as the correlation is larger at a time of allocating a binary variable to each of the plurality of continuous variables;
generating correspondence information that indicates a correspondence relationship between each of the plurality of continuous variables and the allocated binary variable;
converting the first evaluation function into a second evaluation function that includes a plurality of binary variables, the second evaluation function being Ising-type;
setting coefficient information of the second evaluation function; and
searching for a solution to the combinatorial optimization problem using the second evaluation function and the set coefficient information.

**7.** The data processing program according to claim 6, wherein

the information includes a weight coefficient between a first continuous variable and a second continuous variable among the plurality of continuous variables,
wherein the process further comprising
detecting the weight coefficient as the magnitude of the correlation of the continuous variable pair that includes the first continuous variable and the second continuous variable.

**8.** The data processing program according to claim 6, wherein

the information includes a weight coefficient between a first continuous variable and a second continuous variable among the plurality of continuous variables, a first bias coefficient for the first continuous variable, and a second bias coefficient for the second continuous variable,
wherein the process further comprising
detecting a sum of the weight coefficient, the first bias coefficient, and the second bias coefficient as the magnitude of the correlation of the continuous variable pair that includes the first continuous variable and the second continuous variable.

**9.** The data processing program according to claim 6, wherein the process further comprising
detecting the magnitude of the correlation based on time-series information that indicates a temporal change of a value of the plurality of continuous variables obtained by a search that uses a Markov chain Monte Carlo method for a certain period, the search being performed based on the information.

**10.** The data processing program according to claim 6, wherein the process further comprising:

obtaining a first solution represented by a value of the plurality of binary variables; and
converting the first solution into a second solution represented by a value of the plurality of continuous variables based on the correspondence information.

**11.** A data processing method for a computer to execute a process comprising:

detecting magnitude of correlate on of a continuous variable pair included in a plurality of continuous variables based on information regarding a first evaluation function that includes the plurality of continuous variables obtained by formulating a combinatorial optimization problem;
allocating a larger number of common binary variables to the continuous variable pair as the correlation is larger at a time of allocating a binary variable to each of the plurality of continuous variables;
generating correspondence information that indicates a correspondence relationship between each of the plurality of continuous variables and the allocated binary variable;
converting the first evaluation function into a second evaluation function that includes a plurality of binary variables, the second evaluation function being Ising-type;

setting coefficient information of the second evaluation function; and
searching for a solution to the combinatorial optimization problem using the second evaluation function and the set coefficient information.

**12.** The data processing method according to claim 11, wherein

the information includes a weight coefficient between a first continuous variable and a second continuous variable among the plurality of continuous variables,
wherein the process further comprising
detecting the weight coefficient as the magnitude of the correlation of the continuous variable pair that includes the first continuous variable and the second continuous variable.

**13.** The data processing method according to claim 11, wherein

the information includes a weight coefficient between a first continuous variable and a second continuous variable among the plurality of continuous variables, a first bias coefficient for the first continuous variable, and a second bias coefficient for the second continuous variable,
wherein the process further comprising
detecting a sum of the weight coefficient, the first bias coefficient, and the second bias coefficient as the magnitude of the correlation of the continuous variable pair that includes the first continuous variable and the second continuous variable.

**14.** The data processing method according to claim 11, wherein the process further comprising
detecting the magnitude of the correlation based on time-series information that indicates a temporal change of a value of the plurality of continuous variables obtained by a search that uses a Markov chain Monte Carlo method for a certain period, the search being performed based on the information.

**15.** The data processing method according to claim 11, wherein the process further comprising:

obtaining a first solution represented by a value of the plurality of binary variables; and
converting the first solution into a second solution represented by a value of the plurality of continuous variables based on the correspondence information.

FIG. 1

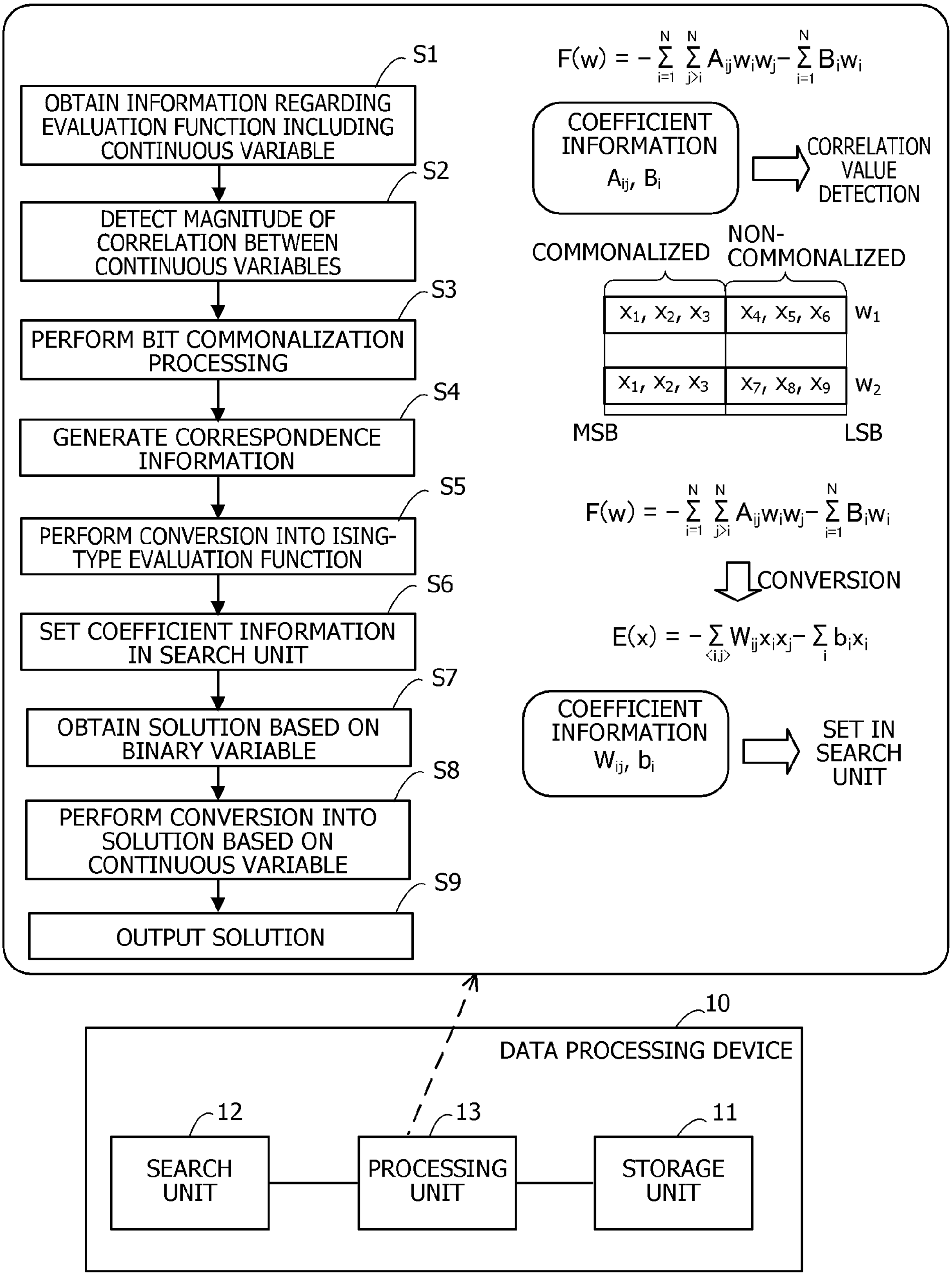
S1
OBTAIN INFORMATION REGARDING EVALUATION FUNCTION INCLUDING CONTINUOUS VARIABLE
S2
DETECT MAGNITUDE OF CORRELATION BETWEEN CONTINUOUS VARIABLES
S3
PERFORM BIT COMMONALIZATION PROCESSING
S4
GENERATE CORRESPONDENCE INFORMATION
S5
PERFORM CONVERSION INTO ISING-TYPE EVALUATION FUNCTION
S6
SET COEFFICIENT INFORMATION IN SEARCH UNIT
S7
OBTAIN SOLUTION BASED ON BINARY VARIABLE
S8
PERFORM CONVERSION INTO SOLUTION BASED ON CONTINUOUS VARIABLE
S9
OUTPUT SOLUTION
$F(w) = -\sum_{i=1}^{N}\sum_{j>i}^{N} A_{ij}w_iw_j - \sum_{i=1}^{N} B_iw_i$
COEFFICIENT INFORMATION $A_{ij}$, $B_i$
CORRELATION VALUE DETECTION
COMMONALIZED
NON-COMMONALIZED
$x_1, x_2, x_3$
$x_4, x_5, x_6$
$w_1$
$x_1, x_2, x_3$
$x_7, x_8, x_9$
$w_2$
MSB
LSB
$F(w) = -\sum_{i=1}^{N}\sum_{j>i}^{N} A_{ij}w_iw_j - \sum_{i=1}^{N} B_iw_i$
CONVERSION
$E(x) = -\sum_{\langle i,j \rangle} W_{ij}x_ix_j - \sum_{i} b_ix_i$
COEFFICIENT INFORMATION $W_{ij}$, $b_i$
SET IN SEARCH UNIT
10
DATA PROCESSING DEVICE
12
SEARCH UNIT
13
PROCESSING UNIT
11
STORAGE UNIT

FIG. 2

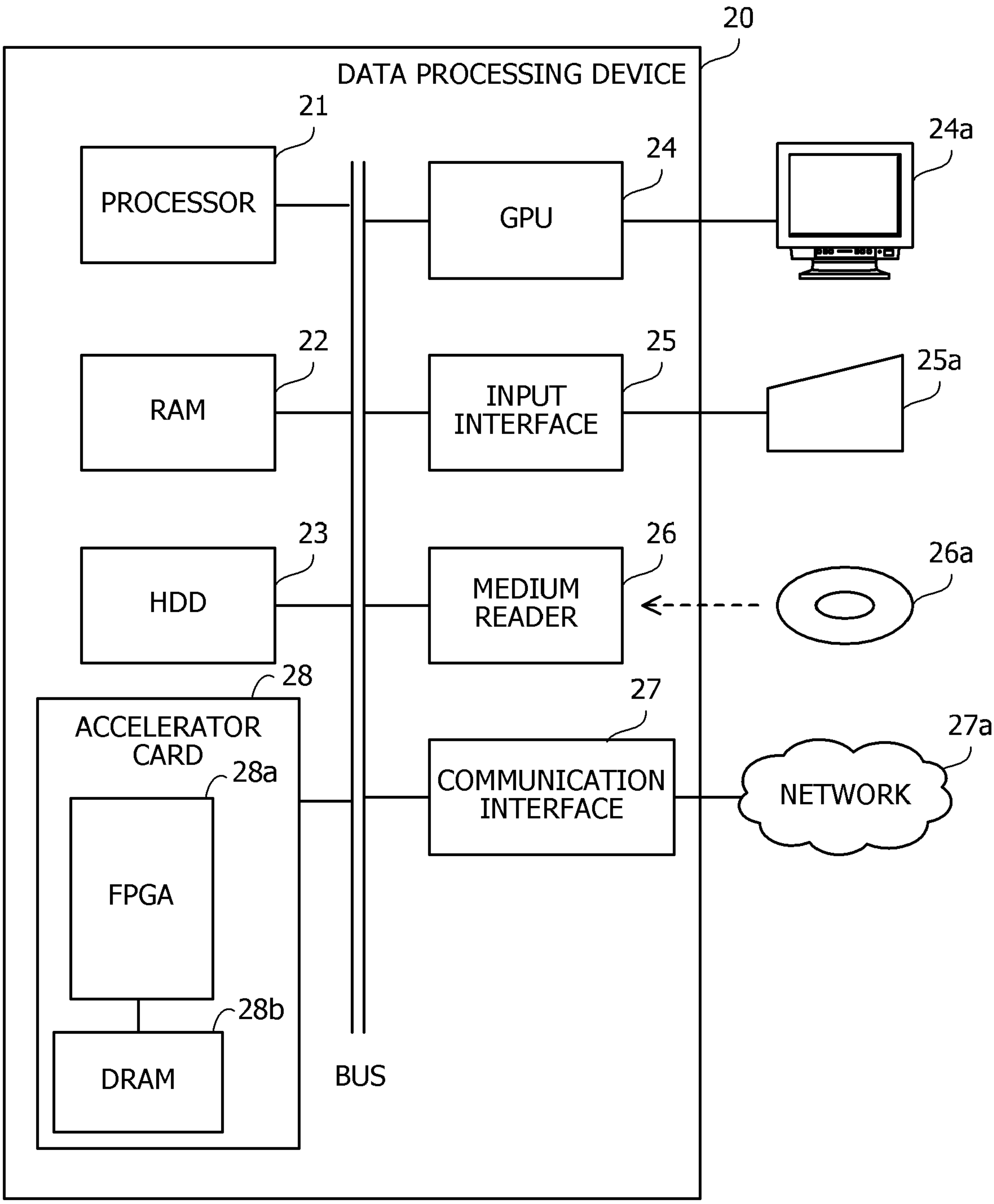
20
DATA PROCESSING DEVICE
21
PROCESSOR
22
RAM
23
HDD
28
ACCELERATOR CARD
28a
FPGA
28b
DRAM
BUS
24
GPU
24a
25
INPUT INTERFACE
25a
26
MEDIUM READER
26a
27
COMMUNICATION INTERFACE
27a
NETWORK

FIG. 3

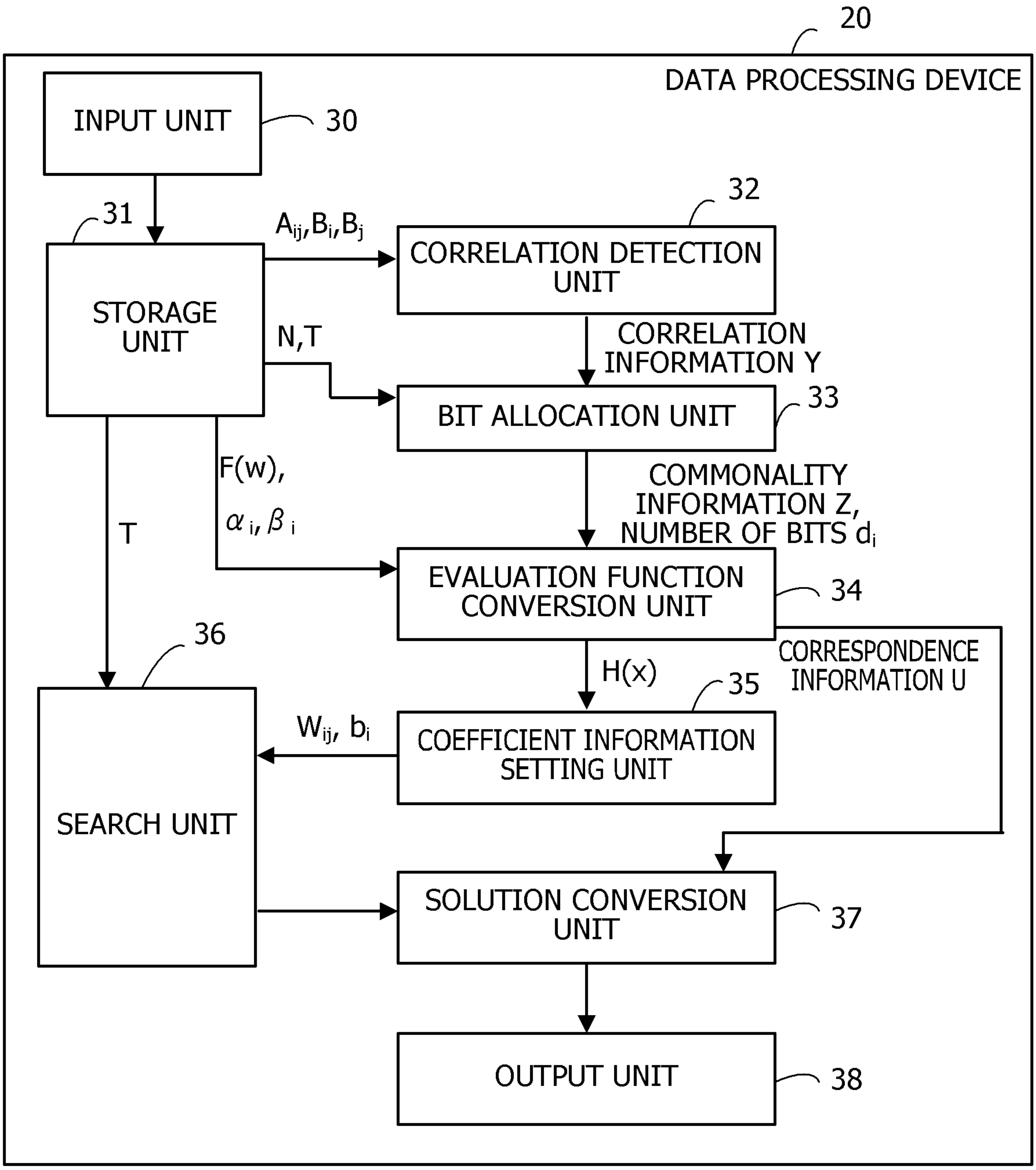
20
DATA PROCESSING DEVICE
INPUT UNIT
30
31
STORAGE UNIT
$A_{ij}$,$B_i$,$B_j$
32
CORRELATION DETECTION UNIT
CORRELATION INFORMATION Y
N,T
BIT ALLOCATION UNIT
33
F(w),
$\alpha_i$, $\beta_i$
T
COMMONALITY INFORMATION Z, NUMBER OF BITS $d_i$
EVALUATION FUNCTION CONVERSION UNIT
34
36
H(x)
CORRESPONDENCE INFORMATION U
35
$W_{ij}$, $b_i$
COEFFICIENT INFORMATION SETTING UNIT
SEARCH UNIT
SOLUTION CONVERSION UNIT
37
OUTPUT UNIT
38

FIG. 4

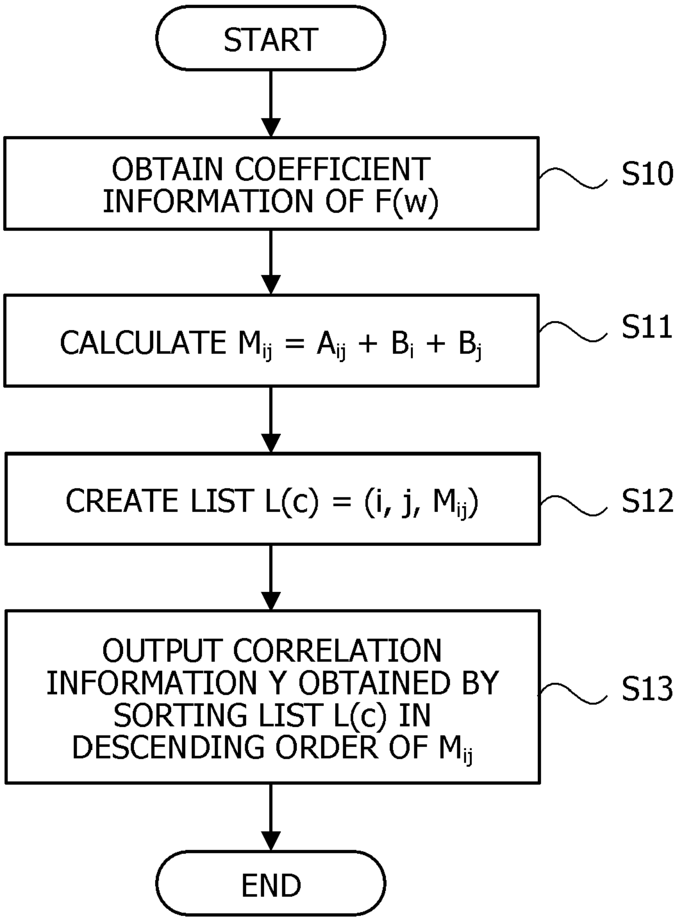
START
OBTAIN COEFFICIENT INFORMATION OF F(w)
S10
CALCULATE $M_{ij} = A_{ij} + B_i + B_j$
S11
CREATE LIST $L(c) = (i, j, M_{ij})$
S12
OUTPUT CORRELATION INFORMATION Y OBTAINED BY SORTING LIST L(c) IN DESCENDING ORDER OF $M_{ij}$
S13
END

FIG. 5

| LIST L(c) | | |
|---|---|---|
| i | j | $M_{ij}$ |
| 7 | 9 | 10 |
| 8 | 19 | 733 |
| ⋮ | ⋮ | ⋮ |
| 16 | 24 | 200 |

FIG. 6

| CORRELATION INFORMATION Y | | |
|---|---|---|
| i | j | $M_{ij}$ |
| 8 | 19 | 733 |
| 16 | 24 | 200 |
| ⋮ | ⋮ | ⋮ |
| 7 | 9 | 10 |

FIG. 7

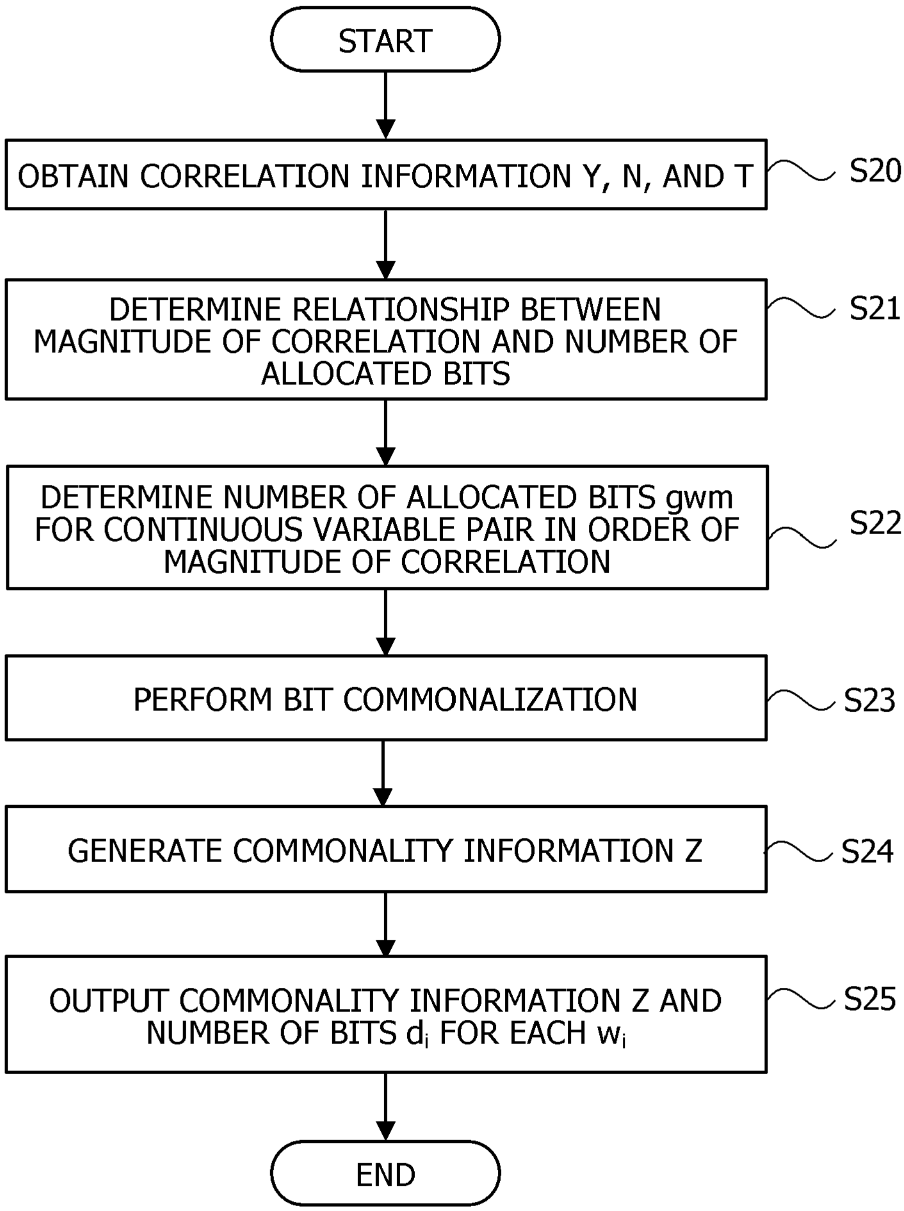
START
OBTAIN CORRELATION INFORMATION Y, N, AND T
S20
DETERMINE RELATIONSHIP BETWEEN MAGNITUDE OF CORRELATION AND NUMBER OF ALLOCATED BITS
S21
DETERMINE NUMBER OF ALLOCATED BITS gwm FOR CONTINUOUS VARIABLE PAIR IN ORDER OF MAGNITUDE OF CORRELATION
S22
PERFORM BIT COMMONALIZATION
S23
GENERATE COMMONALITY INFORMATION Z
S24
OUTPUT COMMONALITY INFORMATION Z AND NUMBER OF BITS $d_i$ FOR EACH $w_i$
S25
END

FIG. 8

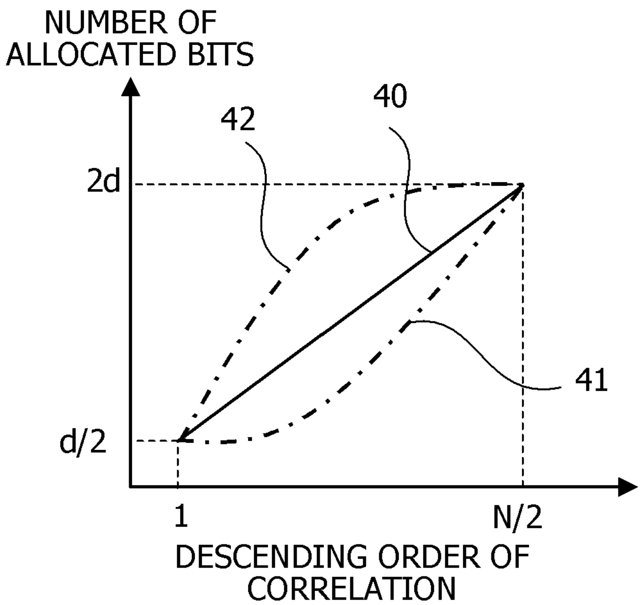
NUMBER OF
ALLOCATED BITS
42
40
2d
41
d/2
1
N/2
DESCENDING ORDER OF
CORRELATION

FIG. 9

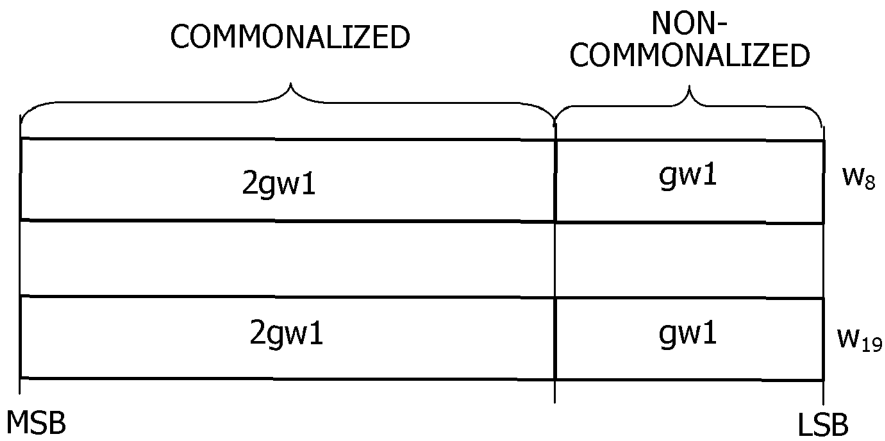
COMMONALIZED
NON-COMMONALIZED
2gw1
gw1
$w_8$
2gw1
gw1
$w_{19}$
MSB
LSB

FIG. 10

| COMMONALITY INFORMATION Z | | |
|---|---|---|
| i | j | COMMONALIZED NUMBER OF BITS NON-COMMONALIZED NUMBER OF BITS |
| 8 | 19 | 2gw1,gw1 |
| ⋮ | ⋮ | ⋮ |

FIG. 11

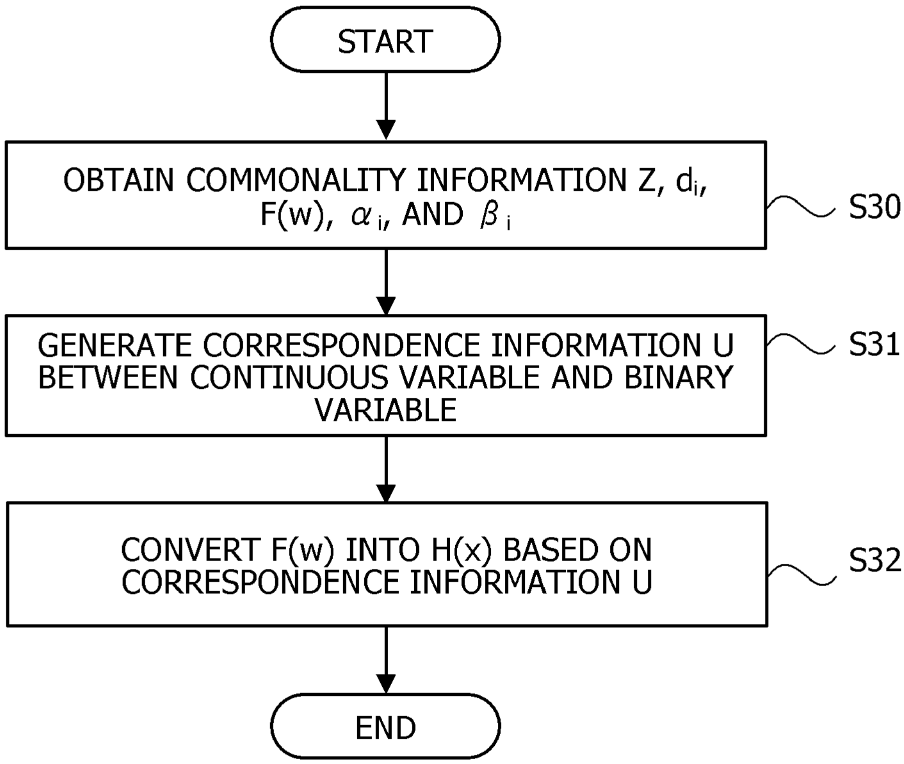
START
OBTAIN COMMONALITY INFORMATION Z, $d_i$, F(w), $\alpha_i$, AND $\beta_i$
S30
GENERATE CORRESPONDENCE INFORMATION U BETWEEN CONTINUOUS VARIABLE AND BINARY VARIABLE
S31
CONVERT F(w) INTO H(x) BASED ON CORRESPONDENCE INFORMATION U
S32
END

FIG. 12

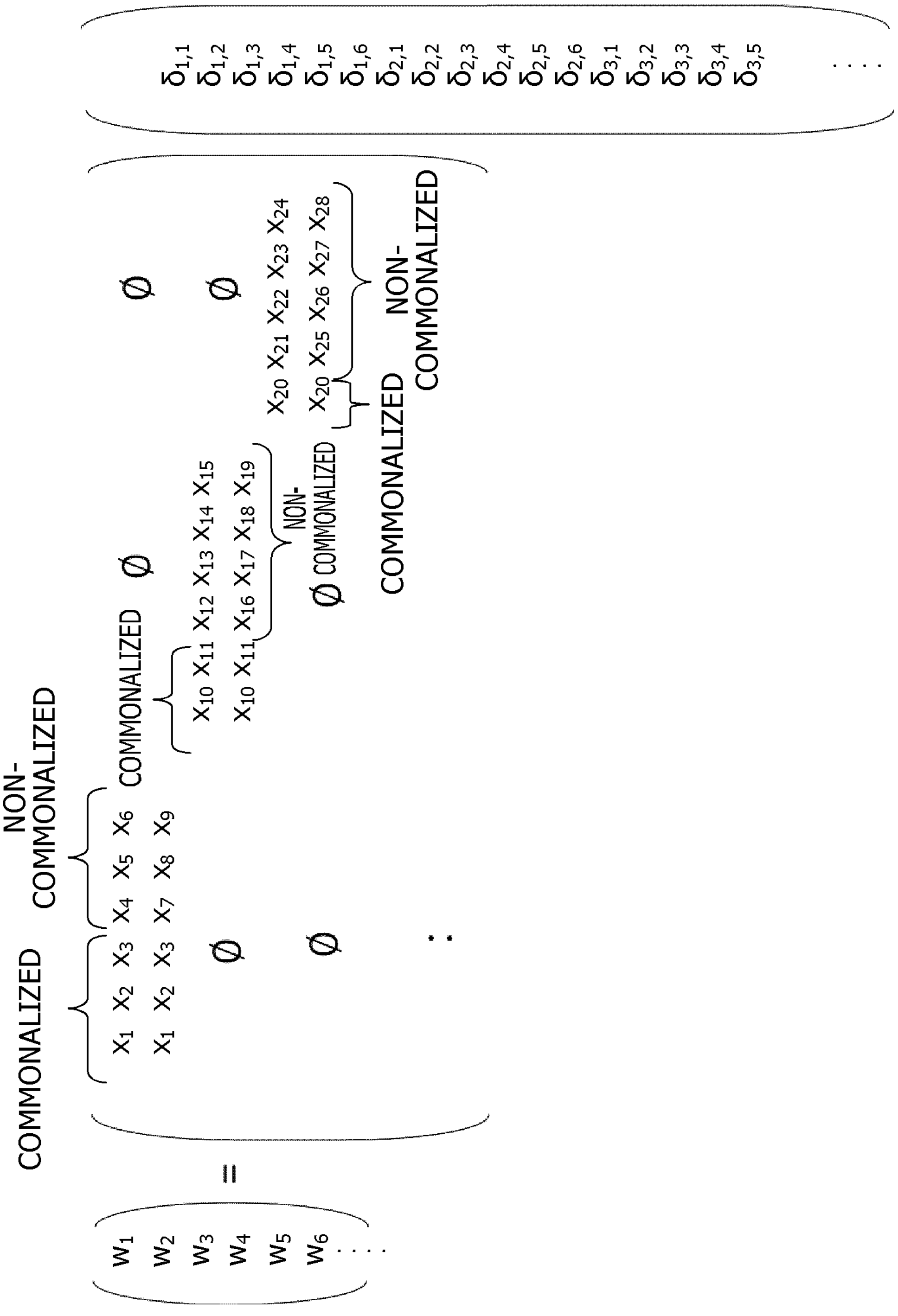
COMMONALIZED
NON-COMMONALIZED
COMMONALIZED
NON-COMMONALIZED
COMMONALIZED
NON-COMMONALIZED

FIG. 13

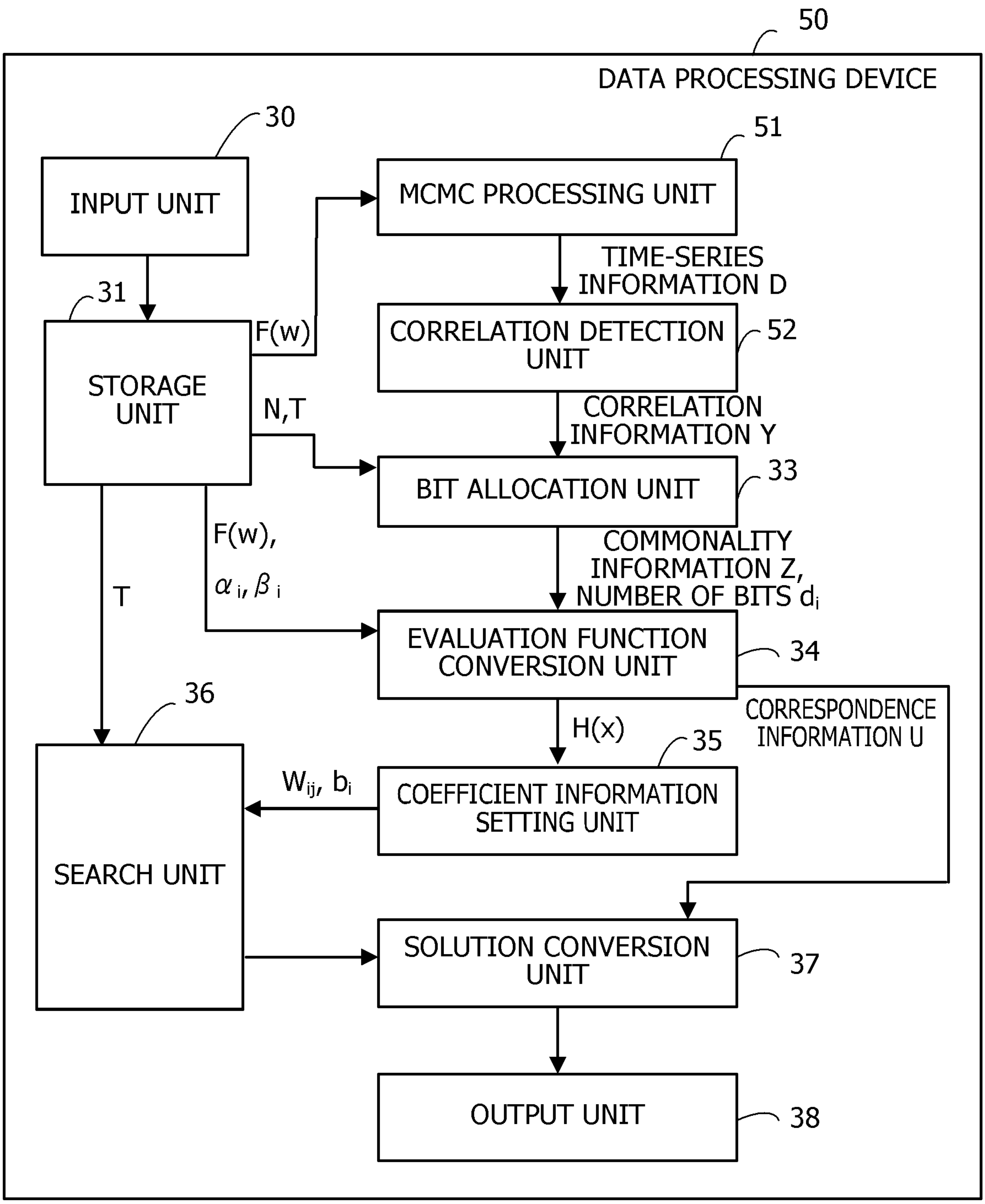
50
DATA PROCESSING DEVICE
30
INPUT UNIT
31
STORAGE UNIT
F(w)
N,T
51
MCMC PROCESSING UNIT
TIME-SERIES INFORMATION D
CORRELATION DETECTION UNIT
52
CORRELATION INFORMATION Y
BIT ALLOCATION UNIT
33
F(w),
$\alpha_i, \beta_i$
T
COMMONALITY INFORMATION Z, NUMBER OF BITS $d_i$
EVALUATION FUNCTION CONVERSION UNIT
34
CORRESPONDENCE INFORMATION U
36
H(x)
35
$W_{ij}$, $b_i$
COEFFICIENT INFORMATION SETTING UNIT
SEARCH UNIT
SOLUTION CONVERSION UNIT
37
OUTPUT UNIT
38

FIG. 14

| MCS | 1 | 2 | 3 | 4 | 5 | 6 | |
|---|---|---|---|---|---|---|---|
| $w_1$ | 0.77542064 | 0.92814837 | 0.2649849 | 0.16902085 | 0.69453239 | 0.45550133 | ··· |
| $w_2$ | 0.22383614 | 0.38711326 | 0.04654759 | 0.5184982 | 0.30224025 | 0.483658 | ··· |
| $w_3$ | 0.70630989 | 0.0713057 | 0.26067236 | 0.75637342 | 0.17371611 | 0.51659378 | ··· |
| $w_4$ | 0.36086864 | 0.56989384 | 0.49912382 | 0.77163349 | 0.79620127 | 0.45476466 | ··· |
| $w_5$ | 0.48660179 | 0.44701789 | 0.34547776 | 0.35559406 | 0.98677384 | 0.1335469 | ··· |
| $w_6$<br>⋮ | 0.95395134<br>⋮ | 0.30777252<br>⋮ | 0.21645786<br>⋮ | 0.60725009<br>⋮ | 0.4279606<br>⋮ | 0.3758048<br>⋮ | |

FIG. 15

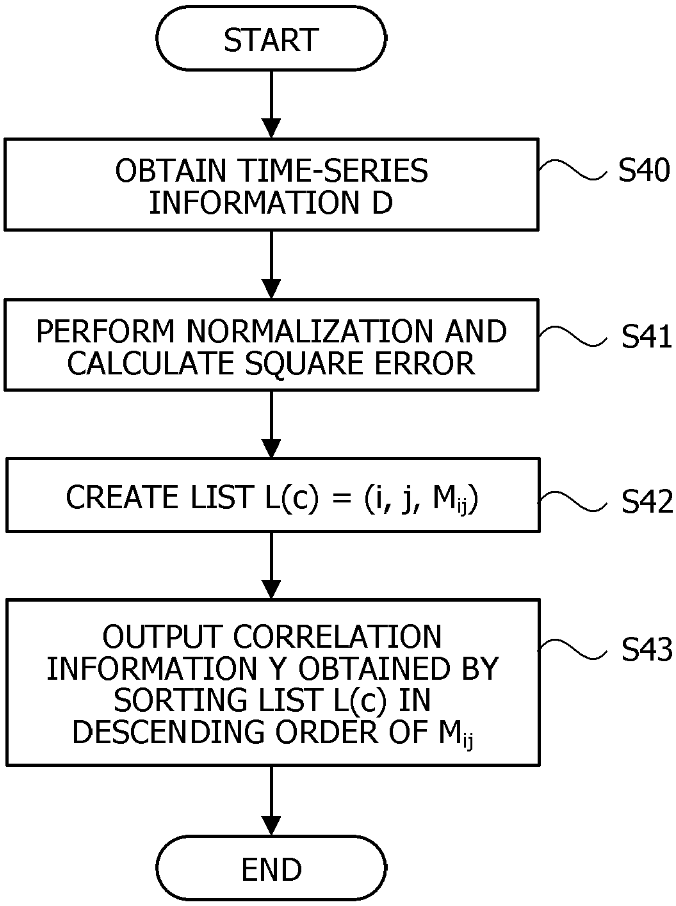
START
OBTAIN TIME-SERIES INFORMATION D
S40
PERFORM NORMALIZATION AND CALCULATE SQUARE ERROR
S41
CREATE LIST L(c) = (i, j, $M_{ij}$)
S42
OUTPUT CORRELATION INFORMATION Y OBTAINED BY SORTING LIST L(c) IN DESCENDING ORDER OF $M_{ij}$
S43
END

Europäisches Patentamt
European Patent Office
Office européen des brevets

# EUROPEAN SEARCH REPORT

Application Number
EP 23 18 7812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/133988 A1 (KONOSHIMA MAKIKO [JP] ET AL) 30 April 2020 (2020-04-30)<br>* abstract *<br>* paragraph [0002] - paragraph [0006] *<br>* paragraph [0024] - paragraph [0076]; figures 1, 2, 10-14 *<br>* paragraph [0092] - paragraph [0096]; figure 2 *<br>----- | 1-15 | INV.<br>G06N5/01<br>G06N7/01 |
| A | US 2021/241166 A1 (HORESH YAIR [IL] ET AL) 5 August 2021 (2021-08-05)<br>* abstract *<br>* paragraph [0065] - paragraph [0076]; figures 3-5 *<br>----- | 1-15 | |
| | | | TECHNICAL FIELDS SEARCHED (IPC) |
| | | | G06N |

The present search report has been drawn up for all claims

1

| Place of search | Date of completion of the search | Examiner |
|---|---|---|
| The Hague | 28 March 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 18 7812

This annex lists the patent family members relating to the patent documents cited in the above-mentioned European search report. The members are as contained in the European Patent Office EDP file on
The European Patent Office is in no way liable for these particulars which are merely given for the purpose of information.

28-03-2024

| Patent document cited in search report | Publication date | Patent family member(s) | Publication date |
|---|---|---|---|
| US 2020133988 A1 | 30-04-2020 | CN 111090826 A | 01-05-2020 |
| | | EP 3644238 A1 | 29-04-2020 |
| | | JP 7187972 B2 | 13-12-2022 |
| | | JP 2020067811 A | 30-04-2020 |
| | | US 2020133988 A1 | 30-04-2020 |
| US 2021241166 A1 | 05-08-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020067811 A